# EUROPEAN PATENT SPECIFICATION

(11) **EP 3 222 506 B1**
(45) Date of publication and mention of the grant of the patent: **19.06.2019**
(21) Application number: 17161584.2
(22) Date of filing: 17.03.2017
(51) Int. Cl.: B62K 5/027, B62K 5/05, B62K 5/08, B62K 5/10, B62J 17/02, B62K 19/46, B62J 99/00

(54) **VEHICLE**
FAHRZEUG
VÉHICULE

(30) Priority: 18.03.2016 JP 2016055799
(43) Date of publication of application: 27.09.2017
(73) Proprietor: Yamaha Hatsudoki Kabushiki Kaisha, Iwata-shi, Shizuoka 438-8501 (JP)
(72) Inventor: SASAKI, Kaoru, Iwata-shi, Shizuoka 438-8501 (JP); ADACHI, Takashi, Iwata-shi, Shizuoka 438-8501 (JP)
(74) Representative: Grünecker Patent- und Rechtsanwälte PartG mbB

(56) References cited:
- EP-A1- 2 921 388
- EP-A1- 2 979 963
- WO-A1-2014/192587
- WO-A1-2015/002172
- CN-U- 205 087 073
- JP-A- 2014 054 970

## Description

### Technical Field

The present disclosure relates to a vehicle equipped with a leanable body frame and two front wheels.

### Background Art

A vehicle described in, for example, Patent Literature 1 comprises a body frame and two front wheels that are arranged side by side in a left-right direction of the body frame.

The vehicle comprises a link mechanism. The link mechanism is disposed above the two front wheels. The link mechanism is configured so as to change positions of the two front wheels relative to the body frame to thereby cause the body frame to lean to the left or right of the vehicle. Furthermore. Patent Literature 2 and 3 are also known from the state of the art.

### Prior Art Literature

[Patent Literature 1] Japanese Patent Publication No. 2005-313876
[Patent Literature 2] EP 2 921 388 A1
[Patent Literature 3] CN 205 087 073 U

WO 2015/002172 A1 discloses a vehicle according to the preamble of claim 1.

### Summary of Disclosure

It is known that a space situated directly below a seat on which the rider sits is used for storing an article in such a way as to be taken out of the space as required. However, in order for the rider to gain an access to the article stored in the storage space, the rider has to alight from the vehicle and lift opens the seat which doubles as a lid to open up the storage space.

Accordingly, it is required to provide a storage space which gives an easy access to an article stored therein in a vehicle including a leanable body frame and two front wheels.

In order to satisfy the above requirement, there is provided a vehicle comprising:a body frame;a left front wheel and a right front wheel that are arranged side by side in a left-right direction of the body frame;a link mechanism disposed above the left front wheel and the right front wheel in an up-down direction of the body frame, and configured to change positions of the left front wheel and the right front wheel relative to the body frame to cause the body frame to lean to left or right of the vehicle;
a seat disposed behind the link mechanism in a front-rear direction of the body frame, and arranged such that a rider sits thereon; and
a storage portion disposed behind the link mechanism in the front-rear direction of the body frame, disposed ahead of the seat in the front-rear direction of the body frame, and defining a space storing an article in such a way as to be taken out of the space,
wherein the link mechanism comprises an upper cross member, a lower cross member, a left side member and a right side member;
wherein the upper cross member, the lower cross member, the left side member and the right side member are turnably connected with one another such that the upper cross member and the lower cross member are held in postures which are parallel to each other, and such that the left side member and the right side member are held in postures which are parallel to each other; and
wherein as viewed from a direction along respective turning axis of the upper cross member, the lower cross member, the left side member and the right side member, the storage portion overlaps both of the upper cross member and the lower cross member at least temporarily when the body frame is caused to lean leftward or rightward with a maximum extent from an upright condition thereof.

In the vehicle comprising the leanable body frame and two front wheels, the upper cross member, the lower cross member, the left side member and the right side cross member that constitute the link mechanism displace within a plane intersecting the front-rear direction of the body frame. It is not easy to secure a space extending in the front-rear direction of the body frame at a position lying ahead of the seat because it is necessary to avoid interference with these members.

However, it has been conceived that it is possible to secure a space which extends in a direction that intersects the front-rear direction of the body frame if the space is attempted to be secured ahead of the seat in the front-rear direction of the body frame and behind the link mechanism in the front-rear direction of the body frame. In particular, it has been conceived that it is possible to secure a space which is relatively long in the up-down direction of the body frame. Specifically, when looking at the vehicle which leans to the left of the body frame with the maximum extent from the direction which follows the turning axes of the upper cross member, the lower cross member, the left side member and the right side member, the storage portion overlaps both the upper cross member and the lower cross member.

According to this configuration, the rider does not have to alight from the vehicle to gain an access to the article stored in the storage portion. Consequently, for the vehicle comprising the leanable body frame and the two front wheels, it is possible to the storage space which gives an easy access to the article stored therein.

The above vehicle may be configured as follows.
wherein the storage portion is disposed in at least one of:
a position overlapping the left front wheel as viewed from a direction along the front-rear direction of the body frame when the body frame is caused to lean leftward with the maximum extent; and
a position overlapping the right front wheel as viewed from the direction along the front-rear direction of the body frame when the body frame is caused to lean rightward with the maximum extent.

According to this configuration, it is possible to the storage space which gives an easy access to the article stored therein while avoiding an interference with the left front wheel and the right front wheel in a case where the body frame is caused to lean. In addition, it is possible to enhance the utilization efficiency of the space to be situated directly behind the left front wheel when the body frame leans leftward with the maximum extent as well as the utilization efficiency of the space to be situated directly behind the right front wheel when the body frame leans rightward with the maximum extent.

The above vehicle may be configured as follows.

The vehicle comprises:
a steering member turnable about a steering axis relative to the body frame;
a steering force transmission mechanism configured to cause the left front wheel and the right front wheel to turn in a direction that the steering member is turned;
a left fender covering at least part of an upper face of the left front wheel, and being turnable with the left front wheel; and
a right fender covering at least part of an upper face of the right front wheel, and being turnable with the right front wheel.

The storage portion is disposed above the left fender and the right fender in the up-down direction of the body frame.

According to the configuration described above, it is possible to provide the storage space which gives an easier access to the article stored therein while avoiding the interference with the left fender and the right fender in a case where the vehicle is steered. In addition, it is possible to enhance the utilization efficiency of the space situated above the left ender and the right fender.

The above vehicle may be configured as follows.

The body frame comprises a pillar-shaped member disposed behind the link mechanism in the front-rear direction of the body frame, and extending in the up-down direction of the body frame.

The storage portion is disposed in at least one of:
a position lying directly on the left of the pillar-shaped member in the left-right diction of the body frame; and
a position lying directly on the right of the pillar-shaped member in the left-right diction of the body frame.

According to the configuration described above, it is possible to provide the storage portion which provides high space utilization efficiency. In addition, it is also possible to secure a space where the rider can place his or her feet behind the portion in the front-rear direction of the body frame and ahead of the seat in the front-rear direction of the body frame.

The above vehicle may be configured as follows.

The vehicle comprises a DC power supply device extending obliquely relative to the front-rear direction of the body frame.

The DC power supply device has an output portion configured to output DC power.

The output portion is exposed to the space defined by the storage portion.

According to this configuration, it is possible to charge electronic equipment within the storage portion. In addition, it is possible to provide the DC power supply device so as to avoid an interference with the link mechanism disposed directly ahead of the storage portion in the front-rear direction of the body frame.

In this case, the above vehicle may be configured as follows.

The storage portion has a portion extending directly below the DC power supply device in the up-down direction of the body frame, and extending to a position lying ahead of a front end of the DC power supply device in the front-rear direction of the body frame.

According to this configuration, the volumetric capacity of the storage portion can be made as large as possible even in a case where the DC power supply device is provided.

The above vehicle may be configured as follows.

The vehicle comprises a lid member covering the storage portion and being turnable about a hinge shaft thereby opening or closing the space defined by the storage portion.

A maximum dimension of the storage portion in the up-down direction of the body frame is greater than a maximum dimension of the storage portion in the left-right direction of the body frame.

The hinge shaft extends in the up-down direction of the body frame.

According to this configuration, an article stored in the storage portion can be protected by the lid member. In addition, the size of an area which the lid member passes when the lid member is turned can be minimized. Consequently, for example, in the event that a space where the legs of the rider are placed is formed behind the storage portion in the front-rear direction of the body frame in the vehicle, the interference of the lid member with the legs of the rider can be suppressed when the space defined by the storage portion is opened and closed.

In this case, the above vehicle may be configured as follows.

The lid member is configured to turn in a direction away from a center of the vehicle in the left-right direction of the body frame to open the space defined by the storage portion.

It is highly possible that the rider attempts to access the interior of the storage portion when the lid member opens the space defined by the storage portion. According to the configuration described above, an easy access to the interior of the storage portion can be gained while suppressing the interference of the lid member with the legs of the rider when the space defined by the storage portion is opened.

In addition, the above vehicle may be configured as follows.

The lid member is configured not to pass a position lying directly behind the hinge shaft in the front-rear direction of the body frame when the lid member turns to open the space defined by the storage portion.

Also with this configuration, an easy access to the interior of the storage portion can be gained while suppressing the interference of the lid member with the legs of the rider when the space defined by the storage portion is opened.

in addition, the above vehicle may be configured as follows.

The vehicle comprises a button disposed in a position adjacent to the lid member, and configured to be depressed to cause the lid member to open the space defined by the storage portion.

A portion of the lid member that is adjacent to the button is disposed behind the button in the front rear direction of the body frame.

According to this configuration, it is possible to suppress a risk of the lid member being opened unintentionally as a result of the legs of the rider or the like being brought into contact with the button.

The above vehicle may be configured as follows.

The vehicle comprises a plate-shaped member fixed to an opening portion of the space defined by the storage portion so as to be stable relative to the body frame.

The plate-shaped member has a cutout portion that opens upward in the up-down direction of the body frame.

According to this configuration, an article stored in the storage portion can be prevented from being dislocated from the storage portion while the article stored in the storage portion is kept visible in an ensured fashion.

### Brief Description of Drawings

Fig. 1 is a left side view entirely showing a vehicle according to one embodiment.
Fig. 2 is a front view showing a front portion of the vehicle of Fig. 1.
Fig. 3 is a plan view showing the front portion of the vehicle of Fig. 1.
Fig. 4 is a plan view showing the front portion of the vehicle of Fig. 1 when steering is performed.
Fig. 5 is a front view showing the front portion of the vehicle of Fig. 1 when leftward leaning is performed.
Fig. 6 is a front view showing the front portion of the vehicle of Fig. 1 when steering and leftward leaning are performed.
Fig. 7 is a rear view showing the front portion of the vehicle of Fig. 1.
Figs. 8A and 8B are views showing a storage portion of the vehicle of Fig. 1.
Fig. 9 is a right side view showing the position of the storage portion when the vehicle of Fig. 1 is in an upright condition.
Fig. 10 is a front view showing the position of the storage portion when the vehicle of Fig. 1 is caused to lean leftward with the maximum extent.
Fig. 11 is a front view showing the position of the storage portion when the vehicle of Fig. 1 is caused to lean rightward with the maximum extent.
Fig. 12 is a section view showing an inner configuration of the storage portion.

### Detailed Description of Embodiments

Referring to the accompanying drawings, an exemplary embodiment will be described in detail below.

In the accompanying drawings, an arrow F denotes a front or forward direction of a vehicle. An arrow B denotes a back/rear or backward/rearward direction of the vehicle. An arrow U denotes an up or upward direction of the vehicle. An arrow D denotes a down or downward direction of the vehicle. An arrow R denotes a right or rightward direction of the vehicle. An arrow L denotes a left or leftward direction of the vehicle.

A vehicle turns with a body frame being caused to lean to the left or right of the vehicle from a vertical direction. Then, in addition to the directions based on the vehicle, directions based on the body frame will be defined. In the accompanying drawings, an arrow FF denotes a front or forward direction of the body frame. An arrow FB denotes a back/rear or backward/rearward of the body frame. An arrow FU denotes an up or upward direction of the body frame. An arrow FD denotes a down or downward direction of the body frame. An arrow FR denotes a right or rightward direction of the body frame. An arrow FL denotes a left or leftward direction of the body frame.

In this description, a "front-rear direction of the body frame," a "left-right direction of the body frame" and an "up-down direction of the body frame" mean a front-rear direction, a left-right direction and an up-down direction based on the body frame when viewed from a rider who rides the vehicle. "A side of or sideways of the body frame" means directly on the right or left in the left-right direction of the body frame.

In this description, an expression "extending in the front-rear direction of the vehicle body frame" includes a fact that it extends while being inclined in relation to the front-rear direction of the vehicle body frame and means that it extends in a direction closer to the front-rear direction of the vehicle body frame than the left-right direction and up-down direction of the vehicle body frame.

In this description, an expression "extending in the left-right direction of the vehicle body frame" includes a fact that it extends while being inclined in relation to the left-right direction of the vehicle body frame and means that it extends in a direction closer to the left-right direction of the vehicle body frame than the front-rear direction and up-down direction of the vehicle body frame.

In this description, an expression "extending in the up-down direction of the vehicle body frame" includes a fact that it extends while being inclined in relation to the up-down direction of the vehicle body frame and means that it extends in a direction closer to the up-down direction of the vehicle body frame than the left-right direction and front-rear direction of the vehicle body frame.

In this description, an expression reading the "vehicle is standing upright or in an upright state" or the "body frame is standing upright or in the upright state" means a state in which the vehicle is not steered at all and the up-down direction of the body frame coincides with the vertical direction. In this state, the directions based on the vehicle coincide with the directions based on the body frame. When the vehicle is turning with the body frame caused to lean to the left or right from the vertical direction, the left-right direction of the vehicle does not coincide with the left-right direction of the body frame. Similarly, the up-down direction of the vehicle does not coincide with the up-down direction of the body frame. However, the front-rear direction of the vehicle coincides with the front-rear direction of the body frame.

In this description, an expression reading "directly on the left of a member A in the left-right direction of the body frame" denotes a space through which the member A passes when the member A is translated to the left in the left-right direction of the body frame. An expression reading "directly on the right of the member A" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated upwards in the up-down direction of the body frame. An expression reading "directly below the member A" is also defined in the same way.

In this description, an expression reading "above the member A in the up-down direction of the body frame" includes not only the space through which the member A passes when the member A is translated upwards in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A" is also defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation, rotating or rotated" means that a member is displaced at an angle of 360 degrees or more about an axis thereof. In this description, "turn, turning or turned" means that a member is displaced at an angle less than 360 degrees about an axis thereof.

In this description, "connected" specifies not only a case where one member and another member are directly connected but also a case where one member and another member are indirectly connected by way of still another member.

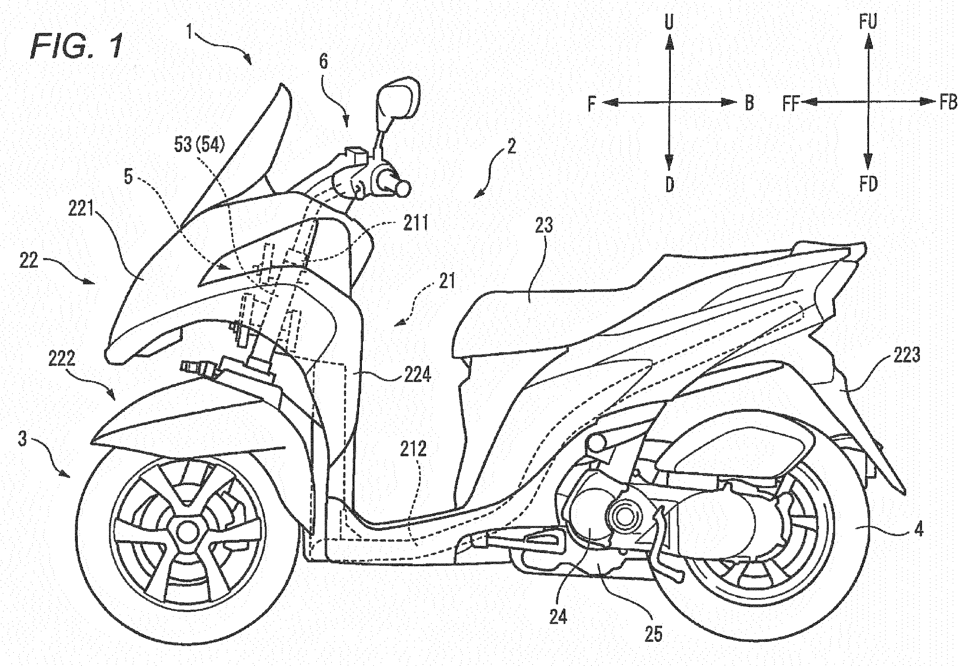

Referring to Figs. 1 to 12, a vehicle 1 according to one embodiment will be described. The vehicle 1 is a vehicle which includes a leanable body frame and two front wheels which are arranged side by side in a left-right direction of the body frame.

As shown in Fig. 1, the vehicle 1 comprises a vehicle main body 2, two front wheels 3, a rear wheel 4, a link mechanism 5 and a steering mechanism 6.

The vehicle main body 2 includes a body frame 21, a body cover 22, a seat 23, a power unit 24, and a rear arm 25.

In Fig. 1, the body frame 21 is in an upright state. The following description to be made while referring to Fig. 1 is based on the premise that the body frame 21 is in the upright state. Fig. 1 is a left side view resulting when the whole of the vehicle 1 is viewed from the left in the left-right direction of the body frame 21.

The body frame 21 includes a head pipe 211 and a main frame 212.

The head pipe 211 is disposed at a front portion of the vehicle 1. When viewing the vehicle 1 from the left in the left-right direction of the body frame 21, an upper portion of the head pipe 211 is disposed behind a lower portion of the head pipe 211 in the front-rear direction of the body frame 21.

The main frame 212 is connected to the head pipe 211. The main frame 212 is disposed behind the head pipe 211 in the front-rear direction of the body frame 21. The main frame 212 supports the seat 23, the power unit 24 and the rear arm 25.

The power unit 24 comprises a power source such as an engine, an electric motor, a battery or the like and a transmission mechanism such as a transmission. Driving force generated by the power source is transmitted to the rear wheel 4 through the transmission mechanism.

The rear arm 25 extends in the front-rear direction of the body frame 21. A front end portion of the rear arm 25 is supported on the main frame 212 and is allowed to turn about an axis that extends in the left-right direction of the body frame 21. A rear end portion of the rear arm 25 supports the rear wheel 4.

The body cover 22 is a body component that covers at least some of components that constitute the vehicle 1. The body cover 22 includes a front cover 221, two front front fenders 222, a rear front fender 223 and a leg shield 224.

The front cover 221 is disposed ahead of the seat 23 in the front-rear direction of the body frame 21. The front cover 221 covers the link mechanism 5 and at least a part of the steering mechanism 6. The front cover 221 is disposed so as not to be displaced relative to the body frame 21.

Each of the front front fenders 222 is at least partially disposed directly below the front cover 221. Each of the front front fenders 222 is at least partially disposed above an associated one of the front wheels 3.

The two front wheels 3 are disposed below the head pipe 211 in an up-down direction of the body frame 21. The two front wheels 3 are at least partially disposed directly below the front cover 221 in the up-down direction of the body frame 21.

The rear wheel 4 is at least partially disposed below the seat 23 in the up-down direction of the body frame 21. The rear wheel 4 is at least partially disposed directly below the rear front fender 223 in the up-down direction of the body frame 21.

The leg shield 224 is disposed behind the two front wheels 3 and ahead of the seat 23 in the front-rear direction of the body frame 21. The leg shield 224 is disposed in a position where the leg shield 224 at least partially covers the legs of the rider who sits on the seat 23 when viewed from the front of the vehicle 1.

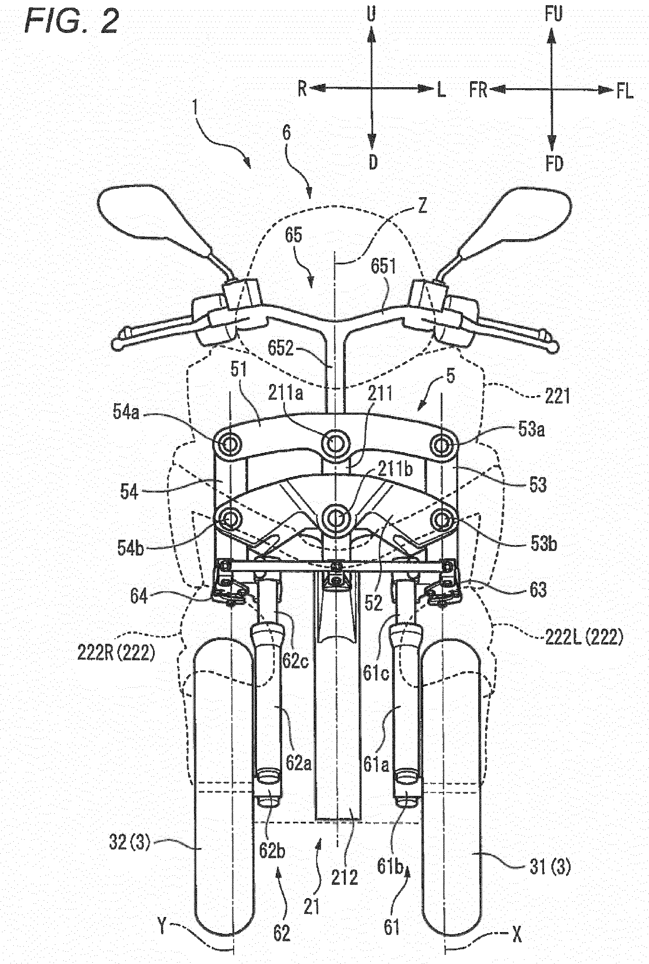

Fig. 2 is a front view of the front portion of the vehicle 1 when viewed from the front in the front-rear direction of the body frame 21. In Fig. 2, the body frame 21 is in the upright state. The following description to be made while referring to Fig. 2 is based on the premise that the body frame 21 is in the upright state. Fig. 2 shows a state in which those shown by solid lines are seen through the front cover 221, the two front front fenders 222 and the leg shield 224 which are shown by dashed lines.

The two front wheels 3 include a left front wheel 31 and a right front wheel 32. The left front wheel 31 is disposed on the left of the head pipe 211 (a part of the body frame 21) in the left-right direction of the body frame 21. The right front wheel 32 is disposed on the right of the head pipe 211 in the left-right direction of the body frame 21. The left front wheel 31 and the right front wheel 32 are arranged side by side in the left-right direction of the body frame 21.

The two front front fenders 222 include a left front fender 222L and a right front fender 222R. The left front fender 222L at least partially covers an upper face of the left front wheel 31. The right front fender 222R at least partially covers an upper face of the right front wheel 32.

The steering mechanism 6 includes a left shock absorbing mechanism 61, a right shock absorbing mechanism 62, a left bracket 63 and a right bracket 64.

The left shock absorbing mechanism 61 includes a left lower portion 61a. The left lower portion 61a supports the left front wheel 31. The left lower portion 61a extends in the up-down direction of the body frame 21. The left lower portion 61a includes a left supporting portion 61b at a lower end portion thereof. The left front wheel 31 is supported on the left supporting portion 61b.

The left shock absorbing mechanism 61 includes a left upper portion 61c. The left upper portion 61c extends in the up-down direction of the body frame 21. The left upper portion 61c is disposed directly above the left lower portion 61a in the up-down direction of the body frame 21 while being partially inserted in the left lower portion 61a. An upper portion of the left upper portion 61c is fixed to the left bracket 63. The left shock absorbing mechanism 61 and the left bracket 63 constitute a left front wheel supporting portion.

The left shock absorbing mechanism 61 is a so-called telescopic shock absorbing mechanism. The left upper portion 61c moves relative to the left lower portion 61a in a direction in which the left lower portion 61a extends, whereby the left shock absorbing mechanism 61 is allowed to extend and contract in the extending direction of the left lower portion 61a. This enables the left shock absorbing mechanism 61 to absorb a displacement of the left front wheels 31 relative to the left upper portion 61c in the up-down direction of the body frame 21.

The right shock absorbing mechanism 62 includes a right lower portion 62a. The right lower portion 62a supports the right front wheel 32. The right lower portion 62a extends in the up-down direction of the body frame 21. The right lower portion 62a includes a right supporting portion 62b at a lower end portion thereof. The right front wheel 32 is supported on the right supporting portion 62b.

The right shock absorbing mechanism 62 includes a right upper portion 62c. The right upper portion 62c extends in the up-down direction of the body frame 21. The right upper portion 62c is disposed directly above the right lower portion 62a in the up-down direction of the body frame 21 while being partially inserted in the right lower portion 62a. An upper portion of the right upper portion 62c is fixed to the right bracket 64. The right shock absorbing mechanism 62 and the right bracket 64 constitute a right front wheel supporting portion.

The right shock absorbing mechanism 62 is a so-called telescopic shock absorbing mechanism. The right upper portion 62c moves relative to the right lower portion 62a in a direction in which the right lower portion 62a extends, whereby the right shock absorbing mechanism 62 is allowed to extend and contract in the extending direction of the right lower portion 62a. This enables the right shock absorbing mechanism 62 to absorb a displacement of the right front wheels 32 relative to the right upper portion 62c in the up-down direction of the body frame 21.

The steering mechanism 6 includes a steering member 65. The steering member 65 includes a handlebar 651 and a steering shaft 652. The handlebar 651 is attached to an upper portion of the steering shaft 652. A portion of a steering shaft 652 is turnably supported by the head pipe 211. An intermediate steering axis Z of the steering shaft 652 extends in the up-down direction of the body frame 21. As shown in Fig. 1, the upper portion of the steering shaft 652 is disposed behind a lower portion thereof in the front-rear direction of the body frame 21. Consequently, the intermediate steering axis Z of the steering shaft 652 is inclined in the front-rear direction of the body frame 21. The steering shaft 652 turns about the intermediate steering axis Z as the rider operates the handlebar 651.

In the vehicle 1 according to this embodiment, the link mechanism 5 adopts a four parallel joint link (also referred to as a parallelogram link) system.

The link mechanism 5 is disposed below the handlebar 651 in the up-down direction of the body frame 21. The link mechanism 5 is disposed above the left front wheel 31 and the right front wheel 32 in the up-down direction of the body frame 21. The link mechanism 5 includes an upper cross member 51, a lower cross member 52, a left side member 53 and a right side member 54. The link mechanism 5 is not interlocked with the turning of the steering shaft 652 about the intermediate steering axis Z which is triggered in association with the operation of the handlebar 651. Namely, the link mechanism 5 does not turn about the intermediate steering axis Z relative to the body frame 21.

The head pipe 211 has an upper intermediate connecting portion 211a. An intermediate portion of the upper cross member 51 is connected to the head pipe 211 by way of the upper intermediate connecting portion 211a. The upper cross member 51 is able to turn relative to the head pipe 211 about an upper intermediate connecting axis which passes the upper intermediate connecting portion 211a to extend in the front-rear direction of the body frame 21.

The left side member 53 has an upper left connecting portion 53a. A left end portion of the upper cross member 51 is connected to the left side member 53 by way of the upper left connecting portion 53a. The upper cross member 51 is able to turn relative to the left side member 53 about an upper left connecting axis which passes the upper left connecting portion 53a to extend in the front-rear direction of the body frame 21.

The right side member 54 has an upper right connecting portion 54a. A right end portion of the upper cross member 51 is connected to the right side member 54 by way of the upper right connecting portion 54a. The upper cross member 51 is able to turn relative to the right side member 54 about an upper right connecting axis which passes the upper right connecting portion 54a to extend in the front-rear direction of the body frame 21.

The head pipe 211 has a lower intermediate connecting portion 211b. An intermediate portion of the lower cross member 52 is connected to the head pipe 211 by way of the lower intermediate connecting portion 211b. The lower cross member 52 is able to turn relative to the head pipe 211 about a lower intermediate connecting axis which passes the lower intermediate connecting portion 211b to extend in the front-rear direction of the body frame 21.

The left side member 53 has a lower left connecting portion 53b. A left end portion of the lower cross member 52 is connected to the left side member 53 by way of the lower left connecting portion 53b. The lower cross member 52 is able to turn relative to the left side member 53 about a lower left connecting axis which passes the lower left connecting portion 53b to extend in the front-rear direction of the body frame 21.

The right side member 54 has a lower right connecting portion 54b. A right end portion of the lower cross member 52 is connected to the right side member 54 by way of the lower right connecting portion 54b. The lower cross member 52 is able to turn relative to the right side member 54 about a lower right connecting axis which passes the lower right connecting portion 54b to extend in the front-rear direction of the body frame 21.

The upper intermediate connecting axis, the upper right connecting axis, the upper left connecting axis, the lower intermediate connecting axis, the lower right connecting axis and the lower left connecting axis extend parallel to one another. The upper intermediate connecting axis, the upper right connecting axis, the upper left connecting axis, the lower intermediate connecting axis, the lower right connecting axis and the lower left connecting axis are disposed above the left front wheel 31 and the right front wheel 32 in the up-down direction of the body frame 21.

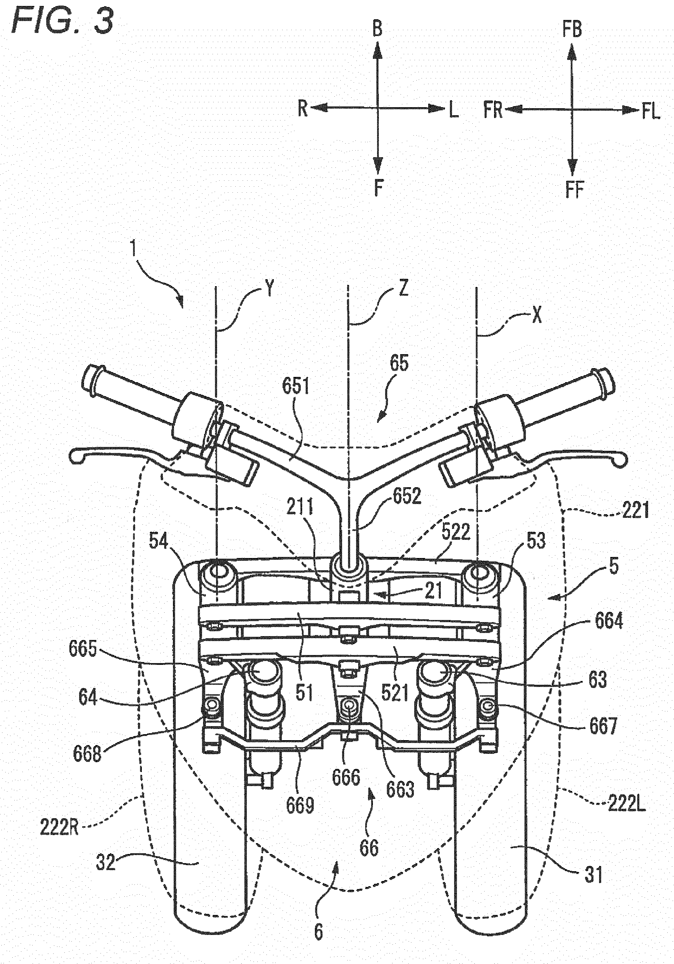

Fig. 3 is a plan view of the front portion of the vehicle 1 as viewed from thereabove in the up-down direction of the body frame 21. In Fig. 3, the body frame 21 is in the upright state. The following description to be made while referring to Fig. 3 is based on the premise that the body frame 21 is in the upright state. Fig. 3 shows a state in which those shown by solid lines are seen through the front cover 221, the left front fender 222L and the right front fender 222R which are shown by dashed lines.

The upper cross member 51 is disposed ahead of the head pipe 211 in the front-rear direction of the body frame 21. The upper cross member 51 extends in the left-right direction of the body frame 21.

The lower cross member 52 includes a front element 521 and a rear element 522. The front element 521 is disposed ahead of the head pipe 211 in the front-rear direction of the body frame 21. The rear element 522 is disposed behind the head pipe 211 in the front-rear direction of the body frame 21. The front element 521 and the rear element 522 extend in the left-right direction of the body frame 21. The lower cross member 52 is disposed below the upper cross member 51 in the up-down direction of the body frame 21.

As shown in Figs. 2 and 3, the left side member 53 is disposed directly on the left of the head pipe 211 in the left-right direction of the body frame 21. The left side member 53 is disposed above the left front wheel 31 in the up-down direction of the body frame 21. The left side member 53 extends in a direction in which the head pipe 211 extends. The left side member 53 extends in a direction in which the intermediate steering axis Z of the steering shaft 652 extends. An upper portion of the left side member 53 is disposed behind a lower portion thereof in the front-rear direction of the body frame 21.

The left bracket 63 has a left turning member, not shown, at an upper portion thereof. The left turning member is disposed in an interior of the left side member 53 and extends in the same orientation as the direction in which the left side member 53 extends. The left turning member is able to turn about a left steering axis X relative to the left side member 53. Namely, the left bracket 63 is able to turn about the left steering axis X relative to the left side member 53. The left steering axis X extends in the direction in which the left side member 53 extends. As shown in Fig. 2, the left steering axis X extends parallel to the intermediate steering axis Z of the steering shaft 652 in the up-down direction of the body frame 21. As shown in Fig. 3, the left steering axis X extends parallel to the intermediate steering axis Z of the steering shaft 652 in the front-rear direction of the body frame 21.

As shown in Figs. 2 and 3, the right side member 54 is disposed directly on the right of the head pipe 211 in the left-right direction of the body frame 21. The right side member 54 is disposed above the right front wheel 32 in the up-down direction of the body frame 21. The right side member 54 extends in the direction in which the head pipe 211 extends. The right side member 54 extends in the direction in which the intermediate steering axis Z of the steering shaft 652 extends. An upper portion of the right side member 54 is disposed behind a lower portion thereof in the front-rear direction of the body frame 21.

The right bracket 64 includes a right turning member, not shown, at an upper portion thereof. The right turning member is disposed in an interior of the right side member 54 and extends in the same orientation as the direction in which the right side member 54 extends. The right turning member is able to turn about a right steering axis Y relative to the right side member 54. Namely, the right bracket 64 is able to turn about the right steering axis Y relative to the right side member 54. The right steering axis Y extends in the direction in which the right side member 54 extends. As shown in Fig. 2, the right steering axis Y extends parallel to the intermediate steering axis Z of the steering shaft 652 in the up-down direction of the body frame 21. As shown in Fig. 3, the right steering axis Y extends parallel to the intermediate steering axis Z of the steering shaft 652 in the front-rear direction of the body frame 21.

Thus, as has been described above, the upper cross member 51, the lower cross member 52, the left side member 53 and the right side member 54 are supported on the body frame 21 so that the upper cross member 51 and the lower cross member 52 are held in postures which are parallel to each other while the left side member 53 and the right side member 54 are held in postures which are parallel to each other.

The steering mechanism 6 includes a steering force transmission mechanism 66. The steering force transmission mechanism 66 transmits steering force with which the rider operates the handlebar 651 to the left bracket 63 and the right bracket 64. As shown in Fig. 3, the steering force transmission mechanism 66 includes an intermediate transmission plate 663, a left transmission plate 664, a right transmission plate 665, an intermediate joint 666, a left joint 667, a right joint 668, and a tie rod 669.

The intermediate transmission plate 663 is connected to a lower portion of the steering shaft 652. The intermediate transmission plate 663 is not able to turn relative to the steering shaft 652. The intermediate transmission plate 663 is able to turn about the intermediate steering axis Z of the steering shaft 652 relative to the head pipe 211.

The left transmission plate 664 is disposed directly on the left of the intermediate transmission plate 663. The left transmission plate 664 is connected to a lower portion of the left bracket 63. The left transmission plate 664 is not able to turn relative to the left bracket 63. The left transmission plate 664 is able to turn about the left steering axis X relative to the left side member 53.

The right transmission plate 665 is disposed directly on the right of the intermediate transmission plate 663 in the left-right direction of the body frame 21. The right transmission plate 665 is connected to a lower portion of the right bracket 64. The right transmission plate 665 is not able to turn relative to the right bracket 64. The right transmission plate 665 is able to turn about the right steering axis Y relative to the right side member 54.

As shown in Fig. 3, the intermediate joint 666 is connected to a front portion of the intermediate transmission plate 663 by way of a shaft portion which extends in the up-down direction of the body frame 21. The intermediate transmission plate 663 and the intermediate joint 666 are allowed to turn relative to each other about this shaft portion. The left joint 667 is disposed on the left of the intermediate joint 666 in the left-right direction of the body frame 21. The left joint 667 is connected to a front portion of the left transmission plate 664 by way of a shaft portion which extends in the up-down direction of the body frame 21. The left transmission plate 664 and the left joint 667 are allowed to turn relative to each other about this shaft portion. The right joint 668 is disposed on the right of the intermediate joint 666 in the left-right direction of the body frame 21. The right joint 668 is connected to a front portion of the right transmission plate 665 by way of a shaft portion which extends in the up-down direction of the body frame. The right transmission plate 665 and the right joint 668 are allowed to turn relative to each other about this shaft portion.

A shaft portion which extends in the front-rear direction of the body frame 21 is provided at a front portion of the intermediate joint 666. A shaft portion which extends in the front-rear direction of the body frame 21 is provided at a front portion of the left joint 667. A shaft portion which extends in the front-rear direction of the body frame 21 is provided at a front portion of the right joint 668. The tie rod 669 extends in the left-right direction of the body frame 21. The tie rod 669 is connected to the intermediate joint 666, the left joint 667 and the right joint 668 by way of those shaft portions. The tie rod 669 and the intermediate joint 666 is able to turn relative to each other about the shaft portion which is provided at the front portion of the intermediate joint 666. The tie rod 669 and the left joint 667 is able to turn relative to each other about the shaft portion which is provided at the front portion of the left joint 667. The tie rod 669 and the right joint 668 is able to turn relative to each other about the shaft portion which is provided at the front portion of the right joint 668.

The left transmission plate 664 is connected to the intermediate transmission plate 663 by way of the left joint 667, the tie rod 669, and the intermediate joint 666. The right transmission plate 665 is connected to the intermediate transmission plate 663 by way of the right joint 668, the tie rod 669 and the intermediate joint 666. The left transmission plate 664 and the right transmission plate 665 are connected to each other by way of the left joint 667, the tie rod 669 and the right joint 668.

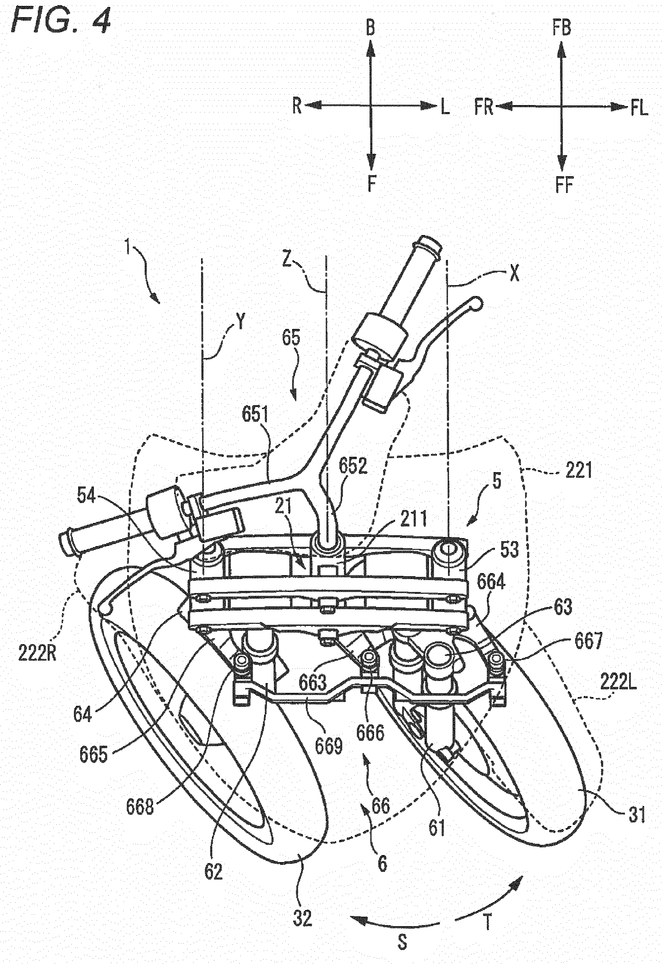

Next, referring to Figs. 3 and 4, a steering operation of the vehicle 1 will be described. Fig. 4 is a plan view of the front part of the vehicle 1 as viewed from thereabove in the up-down direction of the body frame 21 with the left front wheel 31 and the right front wheel 32 steered to the left. In Fig. 4, the body frame 21 is in the upright state. The following description to be made while referring to Fig. 4 is based on the premise that the body frame 21 is in the upright state. Fig. 4 shows a state which is seen through the front cover 221, the left front fender 222L and the right front fender 222R which are shown by dashed lines.

When the rider operates the handlebar 651, the steering shaft 652 turns about the intermediate steering axis Z relative to the head pipe 211. In the case of the front wheels being turned to the left as shown in Fig. 4, the steering shaft 652 turns in a direction indicated by an arrow T. In association with the turning of the steering shaft 652, the intermediate transmission plate 663 turns in the direction indicated by the arrow T about the intermediate steering axis Z relative to the head pipe 211.

In association with the turning of the intermediate transmission plate 663 in the direction indicated by the arrow T, the intermediate joint 666 of the tie rod 669 turns relative to the intermediate transmission plate 663 in a direction indicated by an arrow S. This causes the tie rod 669 to move to the left in the left-right direction of the body frame 21 and to the rear in the front-rear direction of the body frame 21 while maintaining its posture.

In association with the movement of the tie rod 669, the left joint 667 and the right joint 668 of the tie rod 669 turn in the direction indicated by the arrow S relative to the left transmission plate 664 and the right transmission plate 665, respectively. This turns the left transmission plate 664 and the right transmission plate 665 in the direction indicated by the arrow T while allowing the tie rod 669 to maintain its posture.

When the left transmission plate 664 turns in the direction indicated by the arrow T, the left bracket 63, which is not able to turn relative to the left transmission plate 664, turns in the direction indicated by the arrow T about the left steering axis X relative to the left side member 53.

When the right transmission plate 665 turns in the direction indicated by the arrow T, the right bracket 64, which is not able to turn relative to the right transmission plate 665, turns in the direction indicated by the arrow T about the right steering axis Y relative to the right side member 54.

When the left bracket 63 turns in the direction of the arrow T, the left shock absorbing mechanism 61, which is supported by the left bracket 63, turns in the direction of the arrow T about the left steering axis X relative to the left side member 53. When the left shock absorbing mechanism 61 turns in the direction of the arrow T, the left front wheel 31, which is supported on the left shock absorbing mechanism 61 by way of the left supporting portion 61b, turns in the direction of the arrow T about the left steering axis X relative to the left side member 53. As this occurs, the left front fender 222L also turns in the direction of the arrow T together with the left front wheel 31.

When the right bracket 64 turns in the direction of the arrow T, the right shock absorbing mechanism 62, which is supported by the right bracket 64, turns in the direction of the arrow T about the right steering axis Y relative to the right side member 54. When the right shock absorbing mechanism 62 turns in the direction of the arrow T, the right front wheel 32, which is supported on the right shock absorbing mechanism 62 by way of the right supporting portion 62b, turns in the direction of the arrow T about the right steering axis Y relative to the right side member 54. As this occurs, the right front fender 222R also turns in the direction of the arrow T together with right front wheel 32.

When the rider operates the handlebar 651 so as to steer the vehicle 1 to the right, the elements described above turn in opposite directions to the directions in which they turn when the vehicle is steered to the left. Since the elements merely move the other way around in relation to the left-right direction, the detailed description thereof will be omitted here.

Namely, the steering force transmission mechanism 66 is configured so as to connect the left front wheel supporting portion and the right front wheel supporting portion together so that the left front wheel 31 and the right front wheel 32 turn in the direction of the turning depending on the turning of the steering member 65.

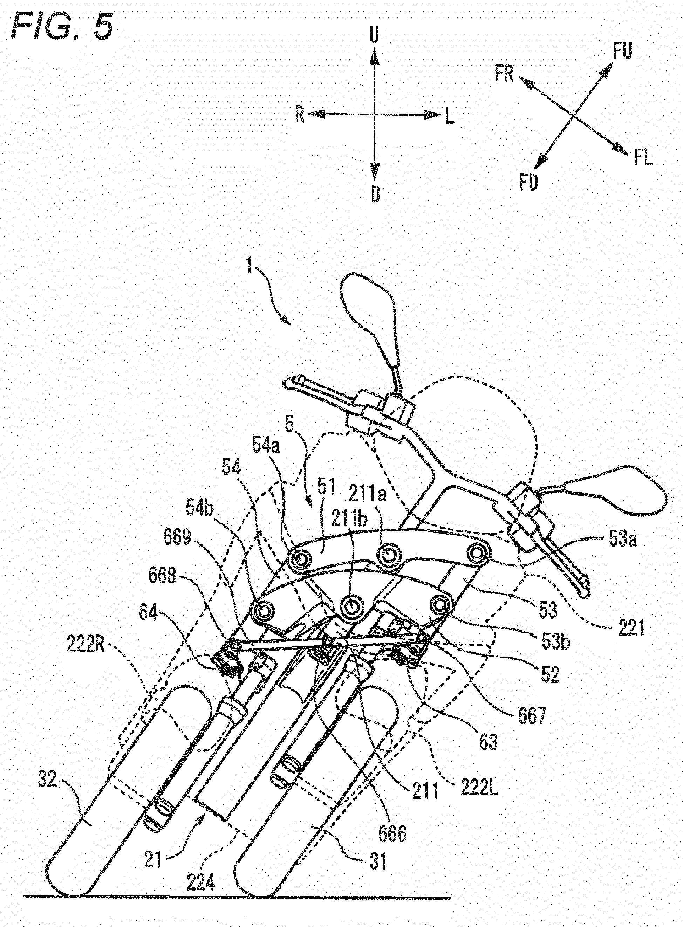

Next, referring to Figs. 2 and 5, a leaning operation of the vehicle 1 will be described. Fig. 5 is a front view of the front portion of the vehicle 1 as viewed from the front in the front-rear direction of the body frame 21 with the body frame 21 caused to lean to the left of the vehicle 1. Fig. 5 shows a state which is seen through the front cover 221, the left front fender 222L, the right front fender 222R and the leg shield 224 which are shown by dashed lines.

As shown in Fig. 2, when the vehicle 1 is viewed from the front of the body frame 21 with the body frame 21 resting in the upright state, the link mechanism 5 has a rectangular shape. As shown in Fig. 5, when the vehicle 1 is viewed from the front of the body frame 21 with the body frame 21 caused to lean, the link mechanism 5 has a parallelogram shape. The operation of the link mechanism 5 is interlocked with the leaning of the body frame 21 in the left-right direction. The operation of the link mechanism 5 means that the upper cross member 51, the lower cross member 52, the left side member 53 and the right side member 54 which constitute the link mechanism 5 turn relative to one another about the turning axes which pass the upper intermediate connecting portion 211a, the upper left connecting portion 53a, the upper right connecting portion 54a, the lower intermediate connecting portion 211b, the lower left connecting portion 53b and the lower right connecting portion 54b, respectively, whereby the shape of the link mechanism 5 changes.

For example, as shown in Fig. 5, when the rider causes the vehicle 1 to lean to the left, the head pipe 211 leans to the left from the vertical direction. When the head pipe 211 leans, the upper cross member 51 turns counterclockwise about the upper intermediate connecting axis which passes the upper intermediate connecting portion 211a relative to the head pipe 211 when viewed from the front of the vehicle 1. Similarly, the lower cross member 52 turns counterclockwise about the lower intermediate connecting axis which passes the lower intermediate connecting portion 211b relative to the head pipe 211 when viewed from the front of the vehicle 1. This causes the upper cross member 51 to move to the left in the left-right direction of the body frame 21 relative to the lower cross member 52.

By moving in the way described above, the upper cross member 51 turns counterclockwise about the upper left connecting axis which passes the upper left connecting portion 53a and the upper right connecting axis which passes the upper right connecting portion 54a relative to the left side member 53 and the right side member 54, respectively, when viewed from the front of the vehicle 1. Similarly, the lower cross member 52 turns counterclockwise about the lower left connecting axis which passes the lower left connecting portion 53b and the lower right connecting axis which passes the lower right connecting portion 54b relative to the left side member 53 and the right side member 54, respectively, when viewed from the front of the vehicle 1. This causes the left side member 53 and the right side member 54 to lean to the left of the vehicle 1 from the vertical direction while holding their postures parallel to the head pipe 211.

As this occurs, the lower cross member 52 moves to the left in the left-right direction of the body frame 21 relative to the tie rod 669. As a result of the lower cross member 52 moving in the way described above, the shaft portions that are provided at the respective front portions of the intermediate joint 666, the left joint 667 and the right joint 668 turn relative to the tie rod 669. This allows the tie rod 669 to hold a posture that is parallel to the upper cross member 51 and the lower cross member 52.

As the left side member 53 leans to the left of the vehicle 1, the left bracket 63 which is supported on the left side member 53 by way of the left turning member leans to the left of the vehicle 1. As the left bracket 63 so leans, the left shock absorbing mechanism 61 which is supported by the left bracket 63 also leans to the left of the vehicle 1. As the left shock absorbing mechanism 61 so leans, the left front wheel 31 which is supported on the left shock absorbing mechanism 61 leans to the left of the vehicle 1 while maintaining its posture which is parallel to the head pipe 211.

As the right side member 54 leans to the left of the vehicle 1, the right bracket 64 which is supported on the right side member 54 by way of the right turning member leans to the left of the vehicle 1. As the right bracket 64 so leans, the right shock absorbing mechanism 62 which is supported by the right bracket 64 also leans to the left of the vehicle 1. As the right shock absorbing mechanism 64 so leans, the right front wheel 32 which is supported on the right shock absorbing mechanism 62 leans to the left of the vehicle 1 while maintaining its posture which is parallel to the head pipe 211.

The description of the leaning operations of the left front wheel 31 and the right front wheel 32 is made in relation to the vertical direction as a reference. However, when the vehicle 1 is operated to lean (when the link mechanism 5 is activated to operate), the up-down direction of the body frame 21 does not coincide with the vertical direction. In a case where the up-down direction of the body frame 21 is set as the reference, when the link mechanism 5 is activated to operate, the left front wheel 31 and the right front wheel 32 change their relative position in the up-down direction of the body frame 21. In other words, the link mechanism 5 changes the relative position of the left front wheel 31 and the right front wheel 32 in the up-down direction of the body frame 21 to thereby cause the body frame 21 to lean to the left or right of the vehicle 1 from the vertical direction.

When the rider causes the vehicle 1 to lean to the right, the elements lean to the right. Since the elements merely move the other way around in relation to the left-right direction, the detailed description thereof will be omitted here.

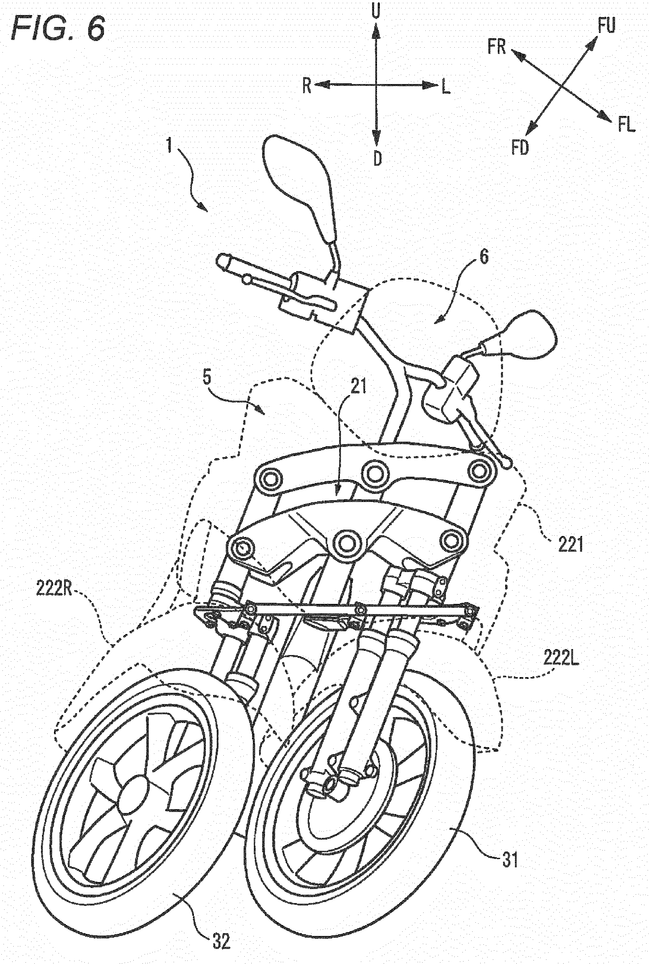

Fig. 6 is a front view of the front part of the vehicle 1, when viewed from the front in the front-rear direction of the body frame 21, with the vehicle 1 caused to lean to the left and turned to the left. Fig. 6 shows a state which is seen through the front cover 221, the left front fender 222L and the right front fender 222R which are shown by dashed lines.

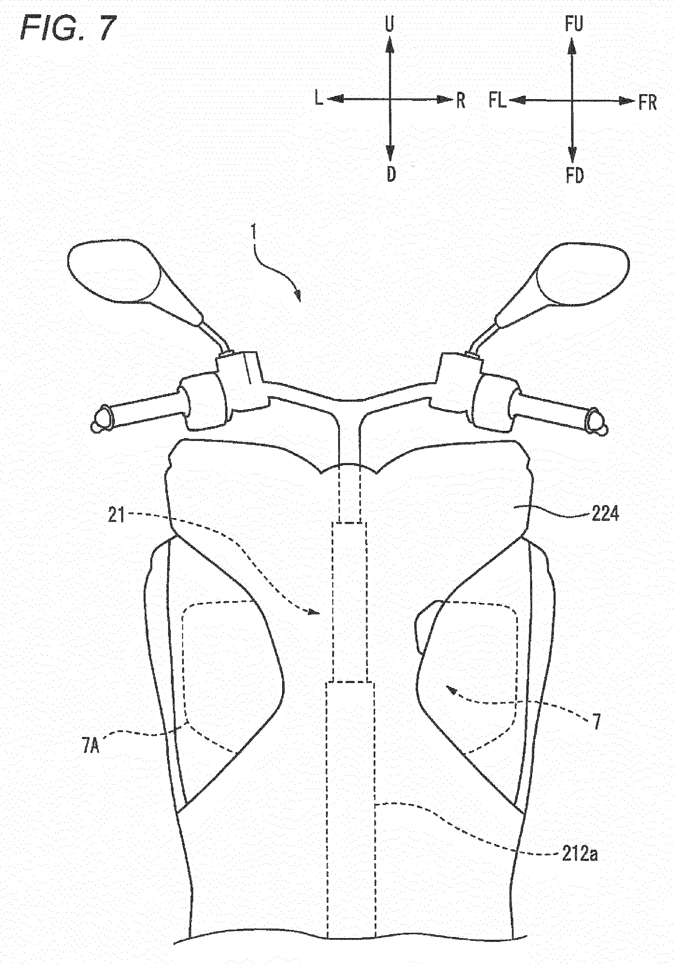

Fig. 7 is a rear view of the front portion of the vehicle 1 when viewed from the rear in the front-rear direction of the body frame 21. In Fig. 7, the body frame 21 is in the upright state. The following description to be made by reference to Fig. 7 will be made so on the premise that the body frame 21 is in the upright state. The vehicle 1 comprises a storage portion 7.

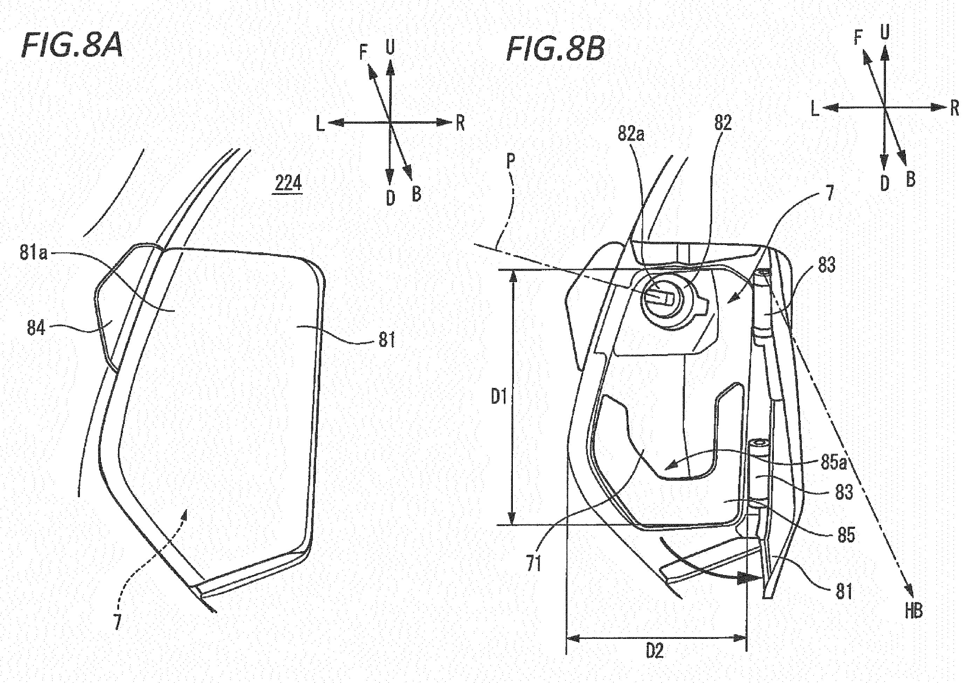

As shown in Fig. 8A, the vehicle 1 comprises a lid member 81. The lid member 81 constitutes part of the leg shield 224. The lid member 81 covers the storage portion 7 so as to open and close a space defined by the storage portion 7. A state in which the space defined by the storage portion 7 is exposed by opening the lid member 81 is shown in Fig. 8B. The space defined by the storage portion 7 is for storing an article therein. The article can be taken out of the space.

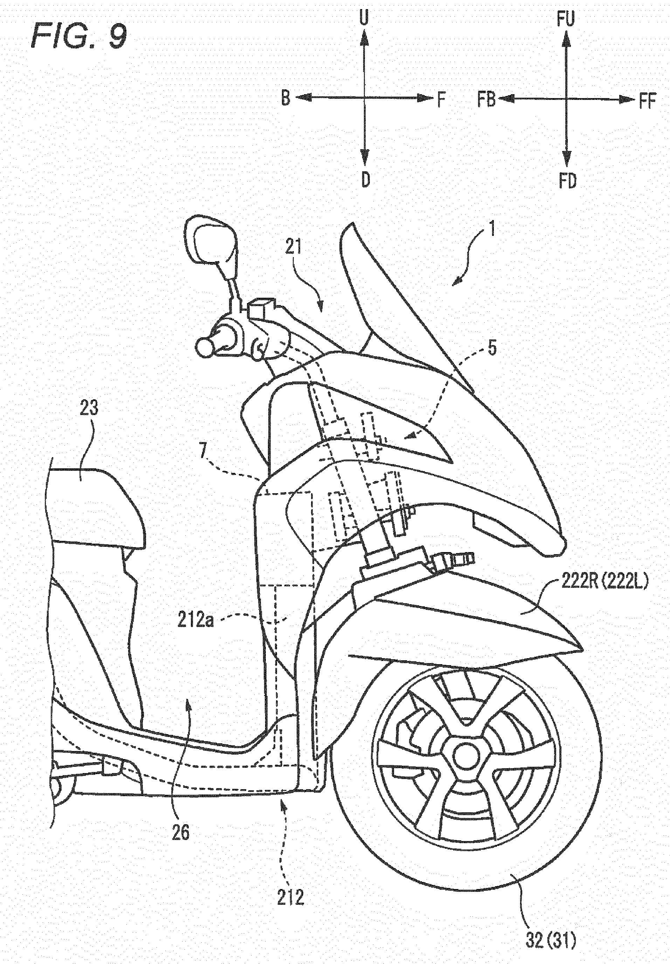

Fig. 9 is a right side view of the front portion of the vehicle 1 as viewed from the right in the left-right direction of the body frame 21. In Fig. 9, the body frame 21 is in the upright state. The following description to be made while referring to Fig. 9 is based on the premise that the body frame 21 is in the upright state. The storage portion 7 is disposed behind the link mechanism 5 in the front-rear direction of the body frame 21 and ahead of the seat 23 in the front-rear direction of the body frame 21.

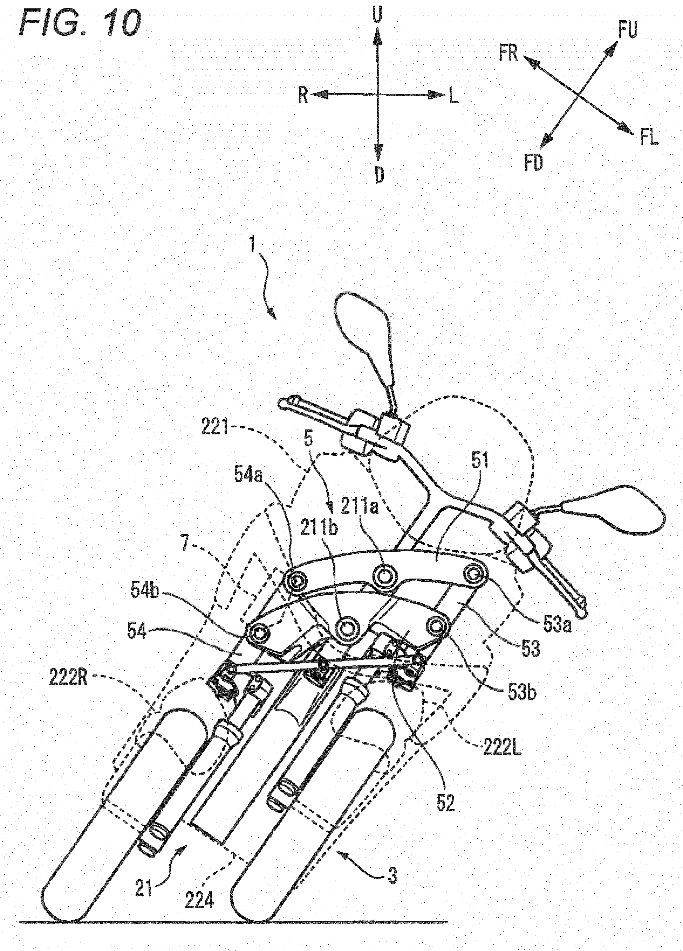

Fig. 10 shows a position of the storage portion 7 when the vehicle 1 leans to the left of the vehicle 1 with the maximum extent. Fig. 10 shows a state which is seen through the front cover 221, the left front fender 222L, the right front fender 222R and the leg shield 224 which are shown by dashed lines. The storage portion 7 overlaps both the upper cross member 51 and the lower cross member 52 when looking at the vehicle 1 so leaning from a direction which follows the upper intermediate connecting axis which passes the upper intermediate connecting portion 211a, the upper left connecting axis which passes the upper left connecting portion 53a, the upper right connecting axis which passes the upper right connecting portion 54a, the lower intermediate connecting axis which passes the lower intermediate connecting portion 211b, the lower left connecting axis which passes the lower left connecting portion 53b and the lower right connecting axis which passes the lower right connecting portion 54b.

In a vehicle having one front wheel, a space extending in the front-rear direction of a body frame can easily be secured on the left or right of a head pipe. Owing to this, it is easy to provide a storage portion ahead of a seat. In the vehicle 1 having the leanable body frame 21 and the two front wheels 3, however, the upper cross member 51, the lower cross member 52, the left side member 53 and the right side member 54 which constitute the link mechanism 5 are displaced within a plane which intersects the front-rear direction of the body frame 21. It is not easy to secure a space which extends in the front-rear direction of the body frame 21 ahead of the seat 23.

However, it has been conceived that it is possible to secure a space which extends in a direction that intersects the front-rear direction of the body frame 21 if the space is attempted to be secured ahead of the seat 23 in the front-rear direction of the body frame 21 and behind the link mechanism 5 in the front-rear direction of the body frame 21. In particular, it has been conceived that it is possible to secure a space which is relatively long in the up-down direction of the body frame 21. Specifically, when looking at the vehicle 1 which leans to the left of the body frame 21 with the maximum extent from the direction which follows the turning axes of the upper cross member 51, the lower cross member 52, the left side member 53 and the right side member 54, the storage portion 7 overlaps both the upper cross member 51 and the lower cross member 52.

According to this configuration, the rider does not have to alight from the vehicle 1 to gain an access to the article stored in the storage portion 7. Consequently, for the vehicle 1 comprising the leanable body frame 21 and the two front wheels 3, it is possible to the storage space which gives an easy access to the article stored therein.

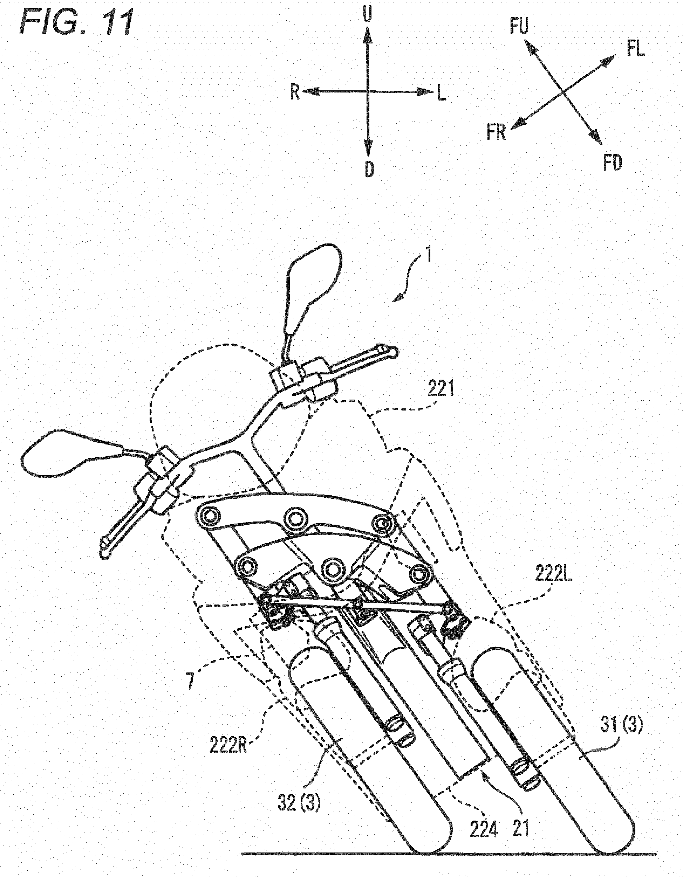

Fig. 11 shows a position of the storage portion 7 when the vehicle 1 leans to the right of the vehicle 1 with the maximum extent. Fig. 11 shows a state which is seen through the front cover 221, the left front fender 222L, the right front fender 222R and the leg shield 224 which are shown by dashed lines. When looking at the vehicle 1 so leaning from a direction which follows the front-rear direction of the body frame 21, the storage portion 7 is provided in a position where it overlaps the right front wheel 32.

Namely, the right front wheel 32 moves toward the storage portion 7 as the body frame 21 moves from the upright state shown in Fig. 9 to the state shown in Fig. 11 in which the body frame 21 leans rightward with the maximum extent. When looking at the vehicle 1 from the direction which follows the front-rear direction of the body frame 21, even though the storage portion 7 and the right front wheel 32 move toward each other to such an extent that they overlap each other, by disposing the storage portion 7 in a space which is situated directly behind an upper portion of the right front wheel 32 (a portion situated above an axle shaft of the right front wheel 32), an interference of the right front wheel 32 with the storage portion 7 can be avoided. Consequently, when the body frame 21 leans to the right with the maximum extent, it is possible to provide the storage space which gives an easy access to the article stored therein while enhancing the utilization efficiency of the space situated directly behind the right front wheel 32.

As shown in Fig. 9, the storage portion 7 is provided above the left front fender 222L and the right front fender 222R in the up-down direction of the body frame 21.

According to the configuration described above, when the vehicle 1 is steered, it is possible to provide the storage space which gives an easier access to the article stored therein while avoiding the interference with the left front fender 222L and the right front fender 222R. In addition, it is possible to enhance the utilization efficiency of the space situated above the left front fender 222L and the right front fender 222R.

As shown in Fig. 9, the main frame 212 of the vehicle 1 has a portion 212a (an example of a pillar-shaped member) which extends in the up-down direction of the body frame 21 in a position lying behind the link mechanism 5 in the front-rear direction of the body frame 21. As shown in Figs. 7 and 9, the storage portion 7 is provided directly on the right of the portion 212a in the left-right direction of the body frame 21.

According to the configuration described above, it is possible to provide the storage portion 7 which provides the high space utilization efficiency. As shown in Fig. 9, it is also possible to secure a space 26 where the rider can place his or her feet behind the portion 212a in the front-rear direction of the body frame 21 and ahead of the seat 23 in the front-rear direction of the body frame.

As shown in Fig. 8B, the vehicle 1 comprises a DC power supply device 82. The DC power supply device 82 has an output portion 82a which outputs direct current electric power. The output portion 82a is exposed to the space defined by the storage portion 7. Electric power outputted from the output portion 82a can be used for charging electronic equipment or the like.

The DC power supply device 82 extends in a direction indicated by a chain line P in the figure. The chain line P intersects the front-rear direction of the body frame 21 obliquely. More specifically, the chain line P extends rearward in the front-rear direction of the body frame 21 while being directed leftward in the left-right direction of the body frame 21.

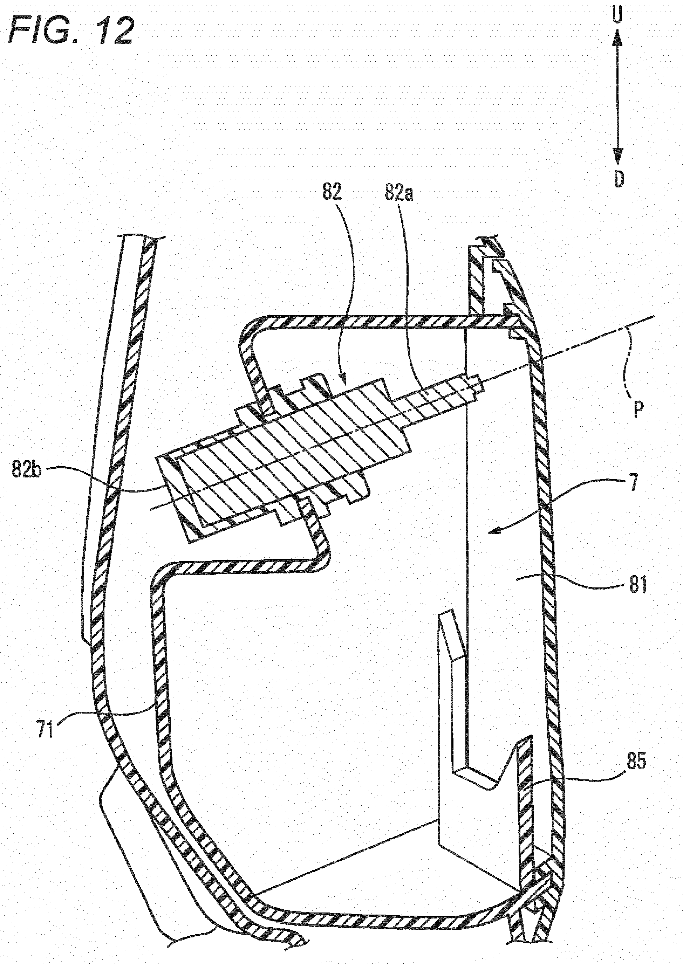

Fig. 12 shows a section of the storage portion 7 resulting when looking at a right rear of the body frame 21 from a direction orthogonal to a plane that includes the chain line P and extends in the up-down direction of the body frame 21. The DC power supply device 82 also extends obliquely with respect to the up-down direction of the body frame 21. More specifically, the DC power supply device 82 extends obliquely upward in the up-down direction of the body frame 21 as it goes rearward in the front-rear direction of the body frame 21.

According to the configuration described above, it is possible to provide easily the DC power supply device 82 in such a way as to avoid the interference with the link mechanism 5 which is disposed directly ahead of the storage portion 7 in the front-rear direction of the body frame 21. The DC power supply device 82 extends rearward in the front-rear direction of the body frame 21 while approaching an upper half body of the rider who sits on the seat 23. This allows the rider to be given an easy access to the output portion 82a.

As shown in Fig. 12, a lower portion 71 of the storage portion 7 (an example of part of the storage portion) extends to a position lying ahead of a front end 82b of the DC power supply device 82 in the front-rear direction of the body frame 21 below the DC power supply device 82 in the up-down direction of the body frame 21.

According to the configuration described above, the volumetric capacity of the storage portion 7 can be made as large as possible even in a case where the DC power supply device 82 is provided.

As shown in Fig. 8B, a maximum dimension D1 of the storage portion 7 in the up-down direction of the body frame 21 is greater than a maximum dimension D2 of the storage portion 7 in the left-right direction of the body frame 21. The lid member 81 turns about hinge shafts 83 so as to be able to open and close the space defined by the storage portion 7. The hinge shafts 83 extend in the up-down direction of the body frame 21.

According to the configuration described above, an article stored in the storage portion 7 can be protected by the lid member 81. Since the lid member 81 turns about the hinge shafts 83 which extend in the up-down direction of the body frame 21, when compared with a case where a lid member 81 having the same shape turn about hinge shafts which extend in the left-right direction of the body frame 21, the turning radius can be reduced. This can minimize the size of an area which the lid member 81 passes when the lid member 81 is opened and closed. Consequently, for example, in the event that a space 26 where the legs of the rider are placed is formed behind the storage portion 7 in the front-rear direction of the body frame 21 in the vehicle, the interference of the lid member 81 with the legs of the rider can be suppressed when the lid member 81 is opened and closed.

As is clear from Figs. 8A and 8B, the lid member 81 is opened in a direction in which the lid member 81 moves away from a center of the vehicle 1 in the left-right direction of the body frame 21. In other words, the lid member 81 is opened in a direction in which the lid member 81 moves away from the legs of the rider which are placed in the space 26.

It is highly possible that the rider attempts to access the interior of the storage portion 7 when the lid member 81 opens the space defined by the storage portion 7. According to the configuration described above, an easy access to the interior of the storage portion 7 can be gained while suppressing the interference of the lid member 81 with the legs of the rider when the space defined by the storage portion 7 is opened.

A state where the lid member 81 is opened with the maximum extent is shown in Fig. 8B. In this state, the lid member 81 is situated on the left of a position lying directly behind the hinge shafts 83 in the front-rear direction of the body frame 21. In other words, the lid member 81 which turns to open the space defined by the storage portion 7 does not pass the position lying directly behind the hinge shafts 83 in the front-rear direction of the body frame 21 which is indicated by an arrow HB.

According to the configuration described above, a distance between a rear end portion of the opened lid member 81 and the seat 23 is easy to be secured. Consequently, an easy access to the interior of the storage portion 7 can be gained while suppressing the interference of the lid member 81 which opens the space defined by the storage portion 7 with the legs of the rider.

As shown in Fig. 8A, the vehicle 1 comprises a button 84. The button 84 is provided on the leg shield 224 so as to lie adjacent to the lid member 81. The lid member 81 is opened by depressing the button 84. A portion 84a of the lid member 81 which lies adjacent to the button 84 is disposed behind the button 84 in the front-rear direction of the body frame 21.

According to this configuration, it is possible to suppress a risk of the lid member 81 being opened unintentionally as a result of the legs of the rider or the like being brought into contact with the button 84.

As shown in Fig. 8B, the vehicle 1 comprises a plate-shaped member 85. The plate-shaped member 85 is fixed to an opening portion of the space defined by the storage portion 7 so as not to be displaced relative to the body frame 21. The plate-shaped member 85 has a cutout portion 85a which opens upward in the up-down direction of the body frame 21.

According to this configuration, an article stored in the storage portion 7 can be prevented from being dislocated from the storage portion 7 while the article stored in the storage portion 7 is kept visible in an ensured fashion.

The embodiment described heretofore is intended to facilitate the understanding of the disclosure and is not intended to limit the disclosure. It is obvious that the above configurations can be modified or improved without departing from the claimed scope, and that their equivalents can also be included in the claimed scope.

In the embodiment described above, the storage portion 7 overlaps both the upper cross member 51 and the lower cross member 52 when looking at the vehicle 1 which leans to the left of the body frame 21 with the maximum extent from the direction which follows the turning axes of the upper cross member 51, the lower cross member 52, the left side member 53 and the right side member 54. However, the storage portion 7 is disposed so as to overlap, when looking at the vehicle 1 in the direction described above, both the upper cross member 51 and the lower cross member 52 at least temporarily when the vehicle 1 leans from the upright state of the body frame 21 to the state that the body frame 21 leans leftward with the maximum extent.

In the embodiment described above, as shown in Fig. 7, the main frame 212 which extends in the up-down direction of the body frame 21, and the storage portion 7 is provided directly on the right of the portion 212a of the main frame 212 in the left-right direction of the body frame 21. Additionally or alternatively, as indicated by a dashed line in the same figure, a storage portion 7A can be provided directly on the left of the portion 212a in the left-right direction of the body frame 21.

As this occurs, the storage portion 7A is disposed so as to overlap, when looking at the vehicle 1 in the direction described above, both the upper cross member 51 and the lower cross member 52 at least temporarily when the vehicle 1 leans from the upright state of the body frame 21 to the state that the body frame 21 leans rightward with the maximum extent.

The storage portion 7A can be provided in a position where the storage portion 7A overlaps the left front wheel 31 when looking at the vehicle 1, in which the body frame 21 is caused to lean leftward with the maximum extent, from a direction which follows the front-rear direction of the body frame 21.

In addition, at least one of the features which have been described heretofore in connection with the storage portion 7 can be applied as required.

The link mechanism 5 may comprise a cross member other than the upper cross member 51 and the lower cross member 52. The "upper cross member" and the "lower cross member" are merely so called based on their relative positions in relation to the up-down direction. The upper cross member does not necessarily mean an uppermost cross member in the link mechanism 5. The upper cross member means a cross member which lies above another cross member which lies therebelow. The lower cross member does not necessarily mean a lowermost cross member in the cross mechanism 5. The lower cross member means a cross member which lies below another cross member which lies thereabove.

In the above embodiment, the upper cross member 51 is the single plate member, while the lower cross member 52 comprises the front element 521 and the rear element 522. However, it is possible to adopt a configuration wherein the upper cross member 51 also comprises a front element and a rear element. A configuration can be adopted in which at least one of the upper cross member 51 and the lower cross member 52 comprises a left plate member that is supported on the head pipe 211 and the left side member 53 as well as a right plate member that is supported on the head pipe 211 and the right side member 54.

In the above embodiment, the link mechanism 5 is supported on the head pipe 211. However, it is possible to adopt a configuration wherein the link mechanism 5 is supported on part of the body frame 21 that is other than the head pipe 211 supporting the steering shaft 652.

In the above embodiment, the steering force transmission mechanism 66 comprises the intermediate transmission plate 663, the left transmission plate 664, the right transmission plate 665, the intermediate joint 666, the left joint 667, the right joint 668, and the tie-rod 669. However, the intermediate transmission plate 663, the left transmission plate 664, the right transmission plate 665, the intermediate joint 666, the left joint 667, and the right joint 668 can be replaced by appropriate mechanisms such as universal joints as required, as long as the steering force inputted from the handlebar 651 can be transmitted to the left front wheel 31 and the right front wheel 32 by way of the tie-rod 669.

The terms and expressions that are used in this description are used to describe the embodiment of the invention and hence should not be construed as limiting the scope of the invention. It should be understood that any equivalents to the characteristic matters that are shown and described in this description should not be excluded and that various modifications made within the scope of claims to be made later are permitted.

When used in this description, the word "parallel" means that two straight lines which do not intersect each other as members while they are inclined at an angle falling within the range of ± 40 degrees are comprised therein. When used in this description to depict directions and members, the expression reading "along a certain direction" means that a case where something inclines at an angle falling within the range of ± 40 degrees relative to the certain direction is comprised therein. When used in this description, the expression reading "something extends in a certain direction" means that a case where something extends while being inclined at an angle falling within the range of ± 40 degrees relative to the certain direction is comprised therein.

When used in this description, the expression "displace along" means displacement in a direction coincident with or parallel to a reference direction. When the expression "displace along" is used in this description in connection with the direction of an arc motion, it means displacement along any arc that is concentric with a center of curvature of a reference arc.

When used in this description, the expression "so as not to be movable relative to the body frame 21" means that a certain part or member is caused to lean in the left-right direction of the vehicle 1 together with the body frame 21 when the body frame 21 is caused to lean in the left-right direction of the vehicle 1. When used in this description, the expression "so as not to be movable relative to the body frame 21" may comprehend not only a case where a certain part or member is directly fixed to the body frame but also a case where the certain part of member is fixed to a vehicle component (a fuel tank, a bracket, the power unit 24, etc.) which is fixed on the body frame 21. Here the term "fixed" may comprehend a case that a certain part or member is fixed by way of a damping member or the like.

The invention can be implemented with many different embodiments. This description should be understood to provide a principle embodiment of the invention. The preferred embodiment which is at least described or illustrated in this description is so described or illustrated based on the understanding that the embodiment is not intended to limit the invention.

The invention comprehends every embodiment which comprises an equivalent element, a modification, a deletion, a combination (for example, a combination of characteristics of various embodiments), an improvement and an alteration which can be recognized by those skilled in the art to which the invention pertains based on the embodiment disclosed in this description. The limitative matters of claims should be construed widely based on terms used in the claims and hence should not be limited by the embodiment described in this specification or the prosecution of this patent application. Those embodiments should be construed as non-exclusive. For example, in this description, the terms "preferable" and "may" should be construed as being non-exclusive, and those terms mean, respectively, that it is "preferable but not limited thereto" and that it "may be acceptable but not limited thereto."

## Claims

1. A vehicle (1) comprising:
a body frame (21);
a left front wheel (31) and a right front wheel (32) that are arranged side by side in a left-right direction of the body frame (21);
a link mechanism (5) disposed above the left front wheel (31) and the right front wheel (32) in an up-down direction of the body frame (21), and configured to change positions of the left front wheel (31) and the right front wheel (32) relative to the body frame (21) to cause the body frame (21) to lean to left or right of the vehicle (1);
a seat (23) disposed behind the link mechanism (5) in a front-rear direction of the body frame (21), and arranged such that a rider sits thereon; and
wherein the link mechanism (5) comprises an upper cross member (51), a lower cross member (52), a left side member (53) and a right side member (54);
wherein the upper cross member (51), the lower cross member (52), the left side member (53) and the right side member (54) are turnably connected with one another such that the upper cross member (51) and the lower cross member (52) are held in postures which are parallel to each other, and such that the left side member (53) and the right side member (54) are held in postures which are parallel to each other; and **characterized in that** the vehicle further comprises a storage portion (7) disposed behind the link mechanism (5) in the front-rear direction of the body frame (21), disposed ahead of the seat (23) in the front-rear direction of the body frame (21), and defining a space storing an article in such a way as to be taken out of the space,
wherein as viewed from a direction along respective turning axis of the upper cross member (51), the lower cross member (52), the left side member (53) and the right side member (54), the storage portion (7) overlaps both of the upper cross member (51) and the lower cross member (52) at least temporarily when the body frame (21) is caused to lean leftward or rightward with a maximum extent from an upright condition thereof.

2. The vehicle (1) according to claim 1,
wherein the storage portion (7) is disposed in at least one of:
a position overlapping the left front wheel (31) as viewed from a direction along the front-rear direction of the body frame (21) when the body frame (21) is caused to lean leftward with the maximum extent; and
a position overlapping the right front wheel (32) as viewed from the direction along the front-rear direction of the body frame (21) when the body frame (21) is caused to lean rightward with the maximum extent.

3. The vehicle (1) according to claim 1 or 2, comprising:
a steering member (65) turnable about a steering axis relative to the body frame (21);
a steering force transmission mechanism (66) configured to cause the left front wheel (31) and the right front wheel (32) to turn in a direction that the steering member (65) is turned;
a left fender (222L) covering at least part of an upper face of the left front wheel (31), and being turnable with the left front wheel (31); and
a right fender (222R) covering at least part of an upper face of the right front wheel (32), and being turnable with the right front wheel (32),
wherein the storage portion (7) is disposed above the left fender (222L) and the right fender (222R) in the up-down direction of the body frame (21).

4. The vehicle (1) according to any one of claims 1 to 3,
wherein the body frame (21) comprises a pillar-shaped member (212a) disposed behind the link mechanism (5) in the front-rear direction of the body frame (21), and extending in the up-down direction of the body frame (21); and
wherein the storage portion (7) is disposed in at least one of:
a position lying directly on the left of the pillar-shaped member (212a) in the left-right diction of the body frame (21); and
a position lying directly on the right of the pillar-shaped member (212a) in the left-right diction of the body frame (21).

5. The vehicle (1) according to any one of claims 1 to 4, comprising:
a DC power supply device (82) extending obliquely relative to the front-rear direction of the body frame (21),
wherein the DC power supply device (82) has an output portion (82a) configured to output DC power; and
wherein the output portion (82a) is exposed to the space defined by the storage portion (7).

6. The vehicle (1) according to claim 5,
wherein the storage portion (7) has a portion extending directly below the DC power supply device (82) in the up-down direction of the body frame (21), and extending to a position lying ahead of a front end (82b) of the DC power supply device (82) in the front-rear direction of the body frame (21).

7. The vehicle (1) according to any one of claims 4 to 6, comprising:
a lid member (81) covering the storage portion (7) and being turnable about a hinge shaft (83) thereby opening or closing the space defined by the storage portion (7),
wherein a maximum dimension of the storage portion (7) in the up-down direction of the body frame (21) is greater than a maximum dimension of the storage portion (7) in the left-right direction of the body frame (21); and
wherein the hinge shaft (83) extends in the up-down direction of the body frame (21).

8. The vehicle (1) according to claim 7,
wherein the lid member (81) is configured to turn in a direction away from a center of the vehicle (1) in the left-right direction of the body frame (21) to open the space defined by the storage portion (7).

9. The vehicle (1) according to claim 7 or 8,
wherein the lid member (81) is configured not to pass a position lying directly behind the hinge shaft (83) in the front-rear direction of the body frame (21) when the lid member(81) turns to open the space defined by the storage portion (7).

10. The vehicle (1) according to any one of claims 7 to 9, comprising:
a button (84) disposed in a position adjacent to the lid member (81), and configured to be depressed to cause the lid member (81) to open the space defined by the storage portion (7),
wherein a portion of the lid member (81) that is adjacent to the button (84) is disposed behind the button (84) in the front rear direction of the body frame (21).

11. The vehicle (1) according to any one of claims 1 to 10, comprising:
a plate-shaped member (85) fixed to an opening portion of the space defined by the storage portion (7) so as to be stable relative to the body frame (21),
wherein the plate-shaped member (85) has a cutout portion (85a) that opens upward in the up-down direction of the body frame (21).

## Patentansprüche

1. Ein Fahrzeug (1), aufweisend:
einen Körperrahmen (21);
ein linkes Vorderrad (31) und ein rechtes Vorderrad (32), die Seite an Seite in einer Links-Rechts-Richtung des Körperrahmens (21) angeordnet sind;
einen Verbindungsmechanismus (5), der über dem linken Vorderrad (31) und dem rechten Vorderrad (32) in einer Oben-Unten-Richtung des Körperrahmens (21) angeordnet ist, und ausgestaltet ist, Positionen des linken Vorderrads (31) und des rechten Vorderrads (32) bezüglich des Körperrahmens (21) zu ändern, um den Körperrahmen (21) nach links oder rechts vom Fahrzeug (1) lehnen zu lassen;
einen Sitz (23), der hinter dem Verbindungsmechanismus (5) in einer Vorne-Hinten-Richtung des Körperrahmens (21) angeordnet ist, und so angeordnet ist, dass ein Fahrer darauf sitzt; und
wobei der Verbindungsmechanismus (5) ein oberes Querelement (51), ein unteres Querelement (52), ein linkes Seitenelement (53) und ein rechtes Seitenelement (54) aufweist;
wobei das obere Querelement (51), das untere Querelement (52), das linke Seitenelement (53) und das rechte Seitenelement (54) drehbar miteinander so verbunden sind, dass das obere Querelement (51) und das untere Querelement (52) in Lagen gehalten werden, die parallel zueinander sind, und so, dass das linke Seitenelement (53) und das rechte Seitenelement (54) in Lagen gehalten werden, die parallel zueinander sind; und **dadurch gekennzeichnet, dass**
das Fahrzeug weiterhin einen Aufbewahrungsabschnitt (7) aufweist, der hinter dem Verbindungsmechanismus (5) in der Vorne-Hinten-Richtung des Körperrahmens (21) angeordnet ist, vor dem Sitz (23) in der Vorne-Hinten-Richtung des Körperrahmens (21) angeordnet ist und einen Raum definiert, der einen Gegenstand in so einer Weise aufbewahrt, um aus dem Raum herausgenommen zu werden,
wobei, wenn von einer Richtung entlang einer jeweiligen Drehachse des oberen Querelements (51), des unteren Querelements (52), des linken Seitenelements (53) und des rechten Seitenelements (54) gesehen, der Aufbewahrungsabschnitt (7) beide von dem oberen Querelement (51) und dem unteren Querelement (52) zumindest zeitweise überlappt, wenn der Körperrahmen (21) veranlasst wird, sich von einem aufrechten Zustand davon nach links oder nach rechts mit einem maximalen Ausmaß zu lehnen.

2. Das Fahrzeug (1) gemäß Anspruch 1,
wobei der Aufbewahrungsabschnitt (7) angeordnet ist in zumindest einer von:
einer Position, die, wenn von einer Richtung entlang der Vorne-Hinten-Richtung des Körperrahmens (21) gesehen, das linke Vorderrad (31) überlappt, wenn der Körperrahmen (21) veranlasst wird, sich nach links mit dem maximalen Ausmaß zu lehnen; und
einer Position, die, wenn von der Richtung entlang der Vorne-Hinten-Richtung des Körperrahmens (21) gesehen, das rechte Vorderrad (32) überlappt, wenn der Körperrahmen (21) veranlasst wird, sich nach rechts mit dem maximalen Ausmaß zu lehnen.

3. Das Fahrzeug (1) gemäß Anspruch 1 oder 2, aufweisend:
ein Steuerelement (65), das um eine Steuerachse drehbar bezüglich des Körperrahmens (21) ist;
einen Steuerkraftübertragungsmechanismus (66), der ausgestaltet ist, das linke Vorderrad (31) und das rechte Vorderrad (32) in einer Richtung, in die das Steuerelement (65) gedreht wird, drehen zu lassen;
einen linken Kotflügel (222L), der zumindest einen Teil einer oberen Fläche des linken Vorderrads (31) abdeckt und drehbar mit dem linken Vorderrad (31) ist; und
einen rechten Kotflügel (222R), der zumindest einen Teil einer oberen Fläche des rechten Vorderrads (32) abdeckt und drehbar mit dem rechten Vorderrad (32) ist, wobei der Aufbewahrungsabschnitt (7) über dem linken Kotflügel (222L) und dem rechten Kotflügel (222R) in der Oben-Unten-Richtung des Körperrahmens (21) angeordnet ist.

4. Das Fahrzeug (1) gemäß irgendeinem der Ansprüche 1 bis 3;
wobei der Körperrahmen (21) ein säulenförmiges Element (212a) aufweist, das hinter dem Verbindungsmechanismus (5) in der Vorne-Hinten-Richtung des Körperrahmens (21) angeordnet ist und sich in der Oben-Unten-Richtung des Körperrahmens (21) erstreckt; und
wobei der Aufbewahrungsabschnitt (7) angeordnet ist in zumindest einer von:
einer Position, die direkt auf der linken Seite des säulenförmigen Elements (212a) in der Links-Rechts-Richtung des Körperrahmens (21) liegt; und
einer Position, die direkt auf der rechten Seite des säulenförmigen Elements (212a) in der Links-Rechts-Richtung des Körperrahmens (21) liegt.

5. Das Fahrzeug (1) gemäß irgendeinem der Ansprüche 1 bis 4, aufweisend:
eine DC-Energiebereitstellungseinrichtung (82), die sich schräg bezüglich der Vorne-Hinten-Richtung des Körperrahmens (21) erstreckt,
wobei die DC-Energiebereitstellungseinrichtung (82) einen Ausgangsabschnitt (82a) aufweist, der ausgestaltet ist, DC-Energie auszugeben; und
wobei der Ausgangsabschnitt (82a) zu dem Raum, der durch den Aufbewahrungsabschnitt (7) definiert wird, exponiert ist.

6. Das Fahrzeug (1) gemäß Anspruch (5),
wobei der Aufbewahrungsabschnitt (7) einen Abschnitt aufweist, der sich direkt unterhalb der DC-Energiebereitstellungseinrichtung (82) in der Oben-Unten-Richtung des Körperrahmens (21) erstreckt und sich zu einer Position erstreckt, die direkt vor einem vorderen Ende (82b) der DC-Energiebereitstellungseinrichtung (82) in der Vorne-Hinten-Richtung des Körperrahmens (21) liegt.

7. Das Fahrzeug (1) gemäß irgendeinem der Ansprüche 4 bis 6, aufweisend:
ein Deckelelement (81), das den Aufbewahrungsabschnitt (7) abdeckt und um eine Gelenkwelle (83) drehbar ist, wobei es dabei den Raum, der durch den Aufbewahrungsabschnitt (7) definiert wird, öffnet oder schließt,
wobei eine maximale Abmessung des Aufbewahrungsabschnitts (7) in der Oben-Unten-Richtung des Körperrahmens (21) größer als eine maximale Abmessung des Aufbewahrungsabschnitts (7) in der Links-Rechts-Richtung des Körperrahmens (21) ist; und
wobei sich die Gelenkwelle (83) in der Oben-Unten-Richtung des Körperrahmens (21) erstreckt.

8. Das Fahrzeug (1) gemäß Anspruch 7,
wobei das Deckelelement (81) ausgestaltet ist, sich in einer Richtung weg von einer Mitte des Fahrzeugs (1) in der Links-Rechts-Richtung des Körperrahmens (21) zu drehen, um den Raum, der durch den Aufbewahrungsabschnitt (7) definiert wird, zu öffnen.

9. Das Fahrzeug (1) gemäß Anspruch 7 oder 8,
wobei das Deckelelement (81) ausgestaltet ist, eine Position, die direkt hinter der Gelenkwelle (83) in der Vorne-Hinten-Richtung des Körperrahmens (21) liegt, nicht zu durchlaufen, wenn sich das Deckelelement (81) öffnet, um den Raum, der durch den Aufbewahrungsabschnitt (7) definiert wird, zu öffnen.

10. Das Fahrzeug (1) gemäß irgendeinem der Ansprüche 7 bis 9, aufweisend:
einen Knopf (84), der in einer Position benachbart zu dem Deckelelement (81) angeordnet ist, und ausgestaltet ist, heruntergedrückt zu werden, um das Deckelelement (81) den Raum, der durch den Aufbewahrungsabschnitt (7) definiert wird, öffnen zu lassen,
wobei ein Abschnitt des Deckelelements (81), der benachbart zu dem Knopf (84) ist,
hinter dem Knopf (84) in der Vorne-Hinten-Richtung des Körperrahmens (21) angeordnet ist.

11. Das Fahrzeug (1) gemäß irgendeinem der Ansprüche 1 bis 10, aufweisend:
ein plattenförmiges Element (85), das an einem Öffnungsabschnitt des Raums, der durch den Aufbewahrungsabschnitt (7) definiert wird, befestigt ist, um bezüglich des Körperrahmens (21) stabil zu sein,
wobei das plattenförmige Element (85) einen Ausschnittsabschnitt (85a) aufweist, der sich nach oben in der Oben-Unten-Richtung des Körperrahmens (21) öffnet.

## Revendications

1. Véhicule (1) comprenant :
un corps de châssis (21) ;
une roue avant gauche (31) et une roue avant droite (32) qui sont agencées côte à côte en direction gauche-droite du corps de châssis (21) ;
un mécanisme de liaison (5) disposé au-dessus de la roue avant gauche (31) et de la roue avant droite (32) en direction haut-bas du corps de châssis (21), et configuré pour changer les positions de la roue avant gauche (31) et de la roue avant droite (32) par rapport au corps de châssis (21) et pour incliner le corps de châssis (21) vers la gauche ou vers la droite du véhicule (1) ;
un siège (23) disposé derrière le mécanisme de liaison (5) en direction avant-arrière du corps de châssis (21), et agencé de telle sorte qu'un conducteur y est assis ; et
dans lequel le mécanisme de liaison (5) comprend un élément d'entretoise supérieur (51), un élément d'entretoise inférieur (52), un élément côté gauche (53) et un élément côté droit (54) ;
dans lequel l'élément d'entretoise supérieur (51), l'élément d'entretoise inférieur (52), l'élément côté gauche (53) et l'élément côté droit (54) sont connectés entre eux de manière tournante de telle sorte que l'élément d'entretoise supérieur (51) et l'élément d'entretoise inférieur (52) sont maintenus dans des postures parallèles entre elles, et de telle sorte que l'élément côté gauche (53) et l'élément côté droit (54) sont maintenus dans des postures parallèles entre elles ; et
**caractérisé en ce que**
le véhicule comprend en outre une portion de stockage (7) disposée en arrière du mécanisme de liaison (5) en direction avant-arrière du corps de châssis (21), disposée en avant du siège (23) en direction avant-arrière du corps de châssis (21), et définissant un espace qui stocke un article de manière à pouvoir être extrait de l'espace,
dans lequel, vue selon une direction correspondant à l'axe de rotation respectif de l'élément d'entretoise supérieur (51), de l'élément d'entretoise inférieur (52), de l'élément côté gauche (53) et de l'élément côté droit (54), la portion de stockage (7) chevauche les deux éléments d'entretoise supérieur (51) et inférieur (52) au moins temporairement quand le corps de châssis (21) est incliné vers la gauche ou vers la droite de manière maximale depuis une condition debout correspondante.

2. Véhicule (1) selon la revendication 1,
dans lequel la portion de stockage (7) est disposée dans au moins une position parmi :
une position qui chevauche la roue avant gauche (31) vue depuis une direction correspondant à la direction avant-arrière du corps de châssis (21) quand le corps de châssis (21) est incliné vers la gauche de manière maximale ; et
une position qui chevauche la roue avant droite (32) vue depuis la direction correspondant à la direction avant-arrière du corps de châssis (21) quand le corps de châssis (21) est incliné vers la droite de manière maximale.

3. Véhicule (1) selon la revendication 1 ou 2, comprenant :
un élément de direction (65) qui peut tourner autour d'un axe de direction par rapport au corps de châssis (21) ;
un mécanisme de transmission de la force de direction (66) configuré pour faire tourner la roue avant gauche (31) et la roue avant droite (32) dans la même direction que l'élément de direction (65) ;
un garde-boue gauche (222L) qui recouvre au moins une partie d'une face supérieure de la roue avant gauche (31), et qui peut tourner avec la roue avant gauche (31) ; et
un garde-boue droit (222R) qui recouvre au moins une partie d'une face supérieure de la roue avant droite (32), et qui peut tourner avec la roue avant droite (32),
dans lequel la portion de stockage (7) est disposée au-dessus du garde-boue gauche (222L) et du garde-boue droit (222R) en direction haut-bas du corps de châssis (21) .

4. Véhicule (1) selon l'une quelconque des revendications 1 à 3,
dans lequel le corps de châssis (21) comprend un élément en forme de pilier (212a) disposé derrière le mécanisme de liaison (5) en direction avant-arrière du corps de châssis (21), et qui s'étend en direction haut-bas du corps de châssis (21) : et
dans lequel la portion de stockage (7) est disposée dans au moins une position parmi :
une position qui se trouve directement à gauche de l'élément en forme de pilier (212a) en direction gauche-droite du corps de châssis (21) ; et
une position qui se trouve directement à droite de l'élément en forme de pilier (212a) en direction gauche-droite du corps de châssis (21).

5. Véhicule (1) selon l'une quelconque des revendications 1 à 4, comprenant :
un dispositif d'alimentation en courant continu (82) qui s'étend en oblique par rapport à la direction avant-arrière du corps de châssis (21),
dans lequel le dispositif d'alimentation en courant continu (82) comporte une portion de sortie (82a) configurée pour sortir un courant continu ; et
dans lequel la portion de sortie (82a) est exposée dans l'espace défini par la portion de stockage (7).

6. Véhicule (1) selon la revendication 5,
dans lequel la portion de stockage (7) comporte une portion qui s'étend directement au-dessous du dispositif d'alimentation en courant continu (82) en direction haut-bas du corps de châssis (21), et qui s'étend jusqu'à une position qui se trouve en avant d'une extrémité avant (82b) du dispositif d'alimentation en courant continu (82) en direction avant-arrière du corps de châssis (21).

7. Véhicule (1) selon l'une quelconque des revendications 4 à 6, comprenant :
un élément de couvercle (81) qui recouvre la portion de stockage (7) et qui peut tourner autour d'un axe de charnière (83), ouvrant ou fermant ainsi l'espace défini par la portion de stockage (7),
dans lequel une dimension maximale de la portion de stockage (7) en direction haut-bas du corps de châssis (21) est supérieure à une dimension maximale de la portion de stockage (7) en direction gauche-droite du corps de châssis (21) ; et
dans lequel l'axe de charnière (83) s'étend en direction haut-bas du corps de châssis (21).

8. Véhicule (1) selon la revendication 7,
dans lequel l'élément de couvercle (81) est configuré pour tourner dans une direction qui l'éloigne du centre du véhicule (1) en direction gauche-droite du corps de châssis (21) pour ouvrir l'espace défini par la portion de stockage (7) .

9. Véhicule (1) selon la revendication 7 ou 8,
dans lequel l'élément de couvercle (81) est configuré pour ne pas dépasser une position qui se trouve directement derrière l'axe de charnière (83) en direction avant-arrière du corps de châssis (21) quand l'élément de couvercle (81) tourne pour ouvrir l'espace défini par la portion de stockage (7).

10. Véhicule (1) selon l'une quelconque des revendications 7 à 9, comprenant :
un bouton (84) disposé dans une position adjacente à l'élément de couvercle (81), et configuré pour être enfoncé afin de commander à l'élément de couvercle (81) d'ouvrir l'espace défini par la portion de stockage (7),
dans lequel une portion de l'élément de couvercle (81) qui est adjacente au bouton (84) est disposée derrière le bouton (84) en direction avant-arrière du corps de châssis (21) .

11. Véhicule (1) selon l'une quelconque des revendications 1 à 10, comprenant :
un élément en forme de plaque (85) fixé à une portion d'ouverture de l'espace défini par la portion de stockage (7) de manière à être stable par rapport au corps de châssis (21),
dans lequel l'élément en forme de plaque (85) présente une portion découpée (85a) qui s'ouvre vers le haut en direction haut-bas du corps de châssis (21).
